**Europäisches Patentamt**

**European Patent Office**

**Office européen des brevets**

(11) Publication number : **0 384 598 B1**

# EUROPEAN PATENT SPECIFICATION

(45) Date of publication of patent specification :
22.12.93 Bulletin 93/51

(51) Int. Cl.⁵ : **C09J 7/00**, C09J 7/02,
C08F 255/00, C08J 7/18

(21) Application number : **90301102.1**

(22) Date of filing : **02.02.90**

(54) **Dual-functional adhesive tapes.**

(30) Priority : **21.02.89 US 312458**

(43) Date of publication of application :
**29.08.90 Bulletin 90/35**

(45) Publication of the grant of the patent :
**22.12.93 Bulletin 93/51**

(84) Designated Contracting States :
**DE FR GB IT SE**

(56) References cited :
EP-A- 0 120 708
US-A- 4 049 483

(73) Proprietor : **MINNESOTA MINING AND
MANUFACTURING COMPANY
3M Center, P.O. Box 33427
St. Paul, Minnesota 55133-3427 (US)**

(72) Inventor : **Johnson, Michael A., c/o Minnesota
Mining and
Manufacturing Co., 2501 Hudson Road,
P.O.Box 33427
St. Paul, Minnesota 55133-3427 (US)**
Inventor : **Harmon, Kimberly K., c/o Minnesota
Mining and
Manufacturing Co., 2501 Hudson Road,
P.O.Box 33427
St. Paul, Minnesota 55133-3427 (US)**

(74) Representative : **Baillie, Iain Cameron et al
c/o Ladas & Parry Altheimer Eck 2
D-80331 München (DE)**

## Description

Field of the Invention

This inventions relates to dual-functional adhesive tapes, more specifically to adhesive tapes comprising a layer of heat-activatable polyolefin adhesive having an acrylic pressure-sensitive adhesive adhered thereto.

Description of the Related Art

Pressure-sensitive adhesives are extremely popular for use in attachment tapes. Their use allows for fast, easy attachment of product components without the use of tools, messy liquid adhesives, or mechanical fasteners. They can be affixed by the average workman without a great deal of skill and experience. Pressure-sensitive adhesives tapes are available with a variety of properties depending on the particular application, e.g., type of substrate. Acrylic pressure-sensitive adhesives are widely popular as they are readily available and provide a good balance of tack, shear and peel properties on a variety of substrates at a relatively low cost.

Domestic and automotive weatherstrip seals and gaskets are commonly manufactured from materials such as ethylene-propylene-diene monomer and neoprene. These compositions are characterized as low surface energy elastomers. Such materials are difficult substrates for adhesives, particularly pressure-sensitive adhesives. Acrylic pressure-sensitive adhesives do not bond effectively to polyolefin substrates, in fact, polyolefin films are frequently used as release liners for acrylic adhesives. Various types of treatments to increase adhesion have been attempted, however, durability of the surface treatment has oftimes been a problem. Use of a layer or coating of material which is a good substrate for the adhesive has also been attempted. However, the weak link in this system is the interface between the polyolefin and the coating.

U.S. Patent No. 4,563,388, (Bonk et al.) discloses an adhesive product in which the substrate is a polyolefin material and an acrylic type normally tacky and pressure-sensitive adhesive is bonded thereto by means of a graft-polymerized monomer coating. These adhesives are disclosed to remain bonded at temperatures up to 120°C.

Heat-activatable polyolefin adhesives, e.g., polyethylene, polypropylene, or polyallomer (an ethylene:propylene copolymer) are well known for use on polyolefin substrates. However, such adhesives do not provide the processing and application convenience of pressure-sensitive adhesives. Further, such adhesives do not yield high performance on all low-energy substrates.

It is particularly desirable for applications such as weatherstrip to have a dual-functional adhesive tape. A dual-functional tape has both a heat-activatable adhesive layer to bond to the polyolefin substrate, e.g., the weatherstripping, and a pressure-sensitive adhesive layer to supply the convenient quick bond to the substrate, e.g., a painted automobile door or other metal surface. However, this is even more difficult than bonding a non-adhesive polyolefin substrate. This is because the pressure-sensitive adhesive must remain adhered even when the heat-activatable adhesive softens, melts and flows, typically at temperatures of about 150°C and higher. It is further desirable to have a heat-activatable adhesive which has high adhesion to polyolefin substrates as well as to other low surface energy compositions.

U.S. Patent Nos. 4,101,210, and 4,130,535 (Coran et al.), disclose dynamically vulcanized thermoplastic elastomers comprising blends of high unsaturation diene rubber and thermoplastic olefin resin in which the rubber is cured. The elastomers are disclosed to have improved toughness and tensile strength. The rubbers are disclosed to be useful for making a variety of articles such as hoses, belts, gaskets, and other injection molded items. The use of such elastomers as adhesives is not disclosed.

U.S. Patent No. 4,350,740, discloses modified $\alpha$-monoolefin polymers with unsaturated carboxylic acid which give greater adhesion to metal when free-radical curing is done in the presence of N-maleamic acids or N-maleimide. Thermoplastic polymers are especially preferred, especially polypropylene, and copolymers of ethylene and propylene.

Applicants have now discovered that a dual-functional adhesive tape including a layer of a heat-activatable adhesive and a layer of a pressure-sensitive adhesive may be made by adhering the pressure-sensitive adhesive to a ionizing-radiation grafted primer layer coated onto the heat-activatable adhesive. The pressure-sensitive adhesive layer will remain adhered to the heat-activatable adhesive layer even when such layer melts during attachment.

In preferred dual-functional adhesive tapes of the invention the heat-activatable adhesive comprises a dynamically vulcanized olefin.

2

## Summary of the Invention

Dual-functional adhesive tapes of the invention comprise a layer of heat-activatable adhesive and at least one layer of ultraviolet radiation-polymerized acrylic pressure-sensitive adhesive, wherein such pressure-sensitive adhesive layers are adhered to the heat-activatable adhesive layer by means of a high-energy radiation grafted primer layer.

In one preferred embodiment of dual-functional adhesive tape constructions of the invention, the pressure-sensitive adhesive layer is a foam or foam-like layer, and the tape further comprises a second nonfoam-like acrylic pressure-sensitive adhesive layer coated atop the foam-like adhesive layer.

Specifically, dual-functional adhesive tapes of the invention comprise a polyolefin heat-activatable adhesive having graft-polymerized to at least a portion thereof, at least one monomer selected from the group consisting of acrylic acid, methacrylic acid and esters thereof; acrylamide; methacrylamide; sterically nonhindered tertiary alkyl acrylamides and methacrylamides; secondary alkyl acrylamides and methacrylamides having three or less carbon atoms in the alkyl group; and N-vinyl pyrrolidone, and firmly adherently bonded to the graft-polymerized monomer, an ultraviolet radiation-polymerized acrylic-type pressure-sensitive adhesive, wherein the pressure-sensitive adhesive remains firmly bonded to the heat-activatable adhesive even when the heat-activatable adhesive is softened during attachment.

In one preferred embodiment, the polyolefin heat-activatable adhesive comprises a dynamically vulcanized olefin adhesive. Such adhesives show exceptional adhesion to EPDM rubber when compared with adhesives of the prior art.

Also provided is a method for making dual-functional tapes of the invention comprising the steps of
(a) extruding a heat-activatable adhesive,
(b) coating onto said heat-activatable adhesive a monomer composition selected from the group consisting of acrylic acid, methacrylic acid and esters thereof; acrylamide; methacrylamide; sterically nonhindered tertiary alkyl acrylamides and methacrylamides; secondary alkyl acrylamides and methacrylamides having three or less carbon atoms in the alkyl group; and N-vinyl pyrrolidone,
(c) irradiating the coated heat-activatable adhesive with ionizing radiation to graft-polymerize said monomer to said heat-activatable polyolefin adhesive,
(d) applying a layer of acrylic type pressure-sensitive adhesive over the graft-polymerized monomer.
All parts, percentages, and ratios herein are by weight unless otherwise specifically noted.

## Detailed Description of the Invention

Useful heat-activatable adhesives of dual-functional tapes of the invention are polyolefin homopolymers, such as polyethylene, polypropylene, derivatives thereof and copolymers thereof. Examples of copolymers include ethylene-acrylic acid copolymers having various ratios, polypropylene acrylic acid and polyethylene acrylic acid copolymers, and blends of polyethylene and ethylene vinyl acetate. The thickness of the polyolefin heat activatable adhesive layer is at least 25 micrometers, preferably from 75 micrometers to 125 micrometers.

Useful heat-activatable adhesives include Primacor™ 3330, available from Dow Chemical, Polybond 1001, available from BP Performance Polymers, and dynamically vulcanized polyolefins available from Monsanto Chemical Company under the name Santoprene™, e.g., Santoprene™ 201-73. Preferred heat-activatable adhesives are Santoprene™ polyolefins, especially those having a Shore D hardness of 50 or less, and a Shore A hardness of 55 or more.

Preferred heat-activatable adhesives of the invention effectively adhere to both thermoplastic and thermoset substrates. The adhesives achieve a high degree of compatible interfacial mixing with a thermoplastic substrate while molten, which upon cooling yields a high-strength bond. With a thermoset substrate, the molten adhesive achieves a superior wetting out of the substrate surface, again yielding a high strength bond when cooled.

The heat-activatable adhesives may contain fillers such as pigments, crosslinking agents, viscosity agents, dispersants, and extrusion aids.

The monomers suitable for graft-polymerization onto the polyolefin heat-activatable adhesive to promote adherence of the pressure-sensitive adhesive thereto include acrylic acid, methacrylic acid and esters thereof; acrylamide; methacrylamide; sterically non-hindered tertiary alkyl acrylamides and methacrylamides; secondary alkyl acrylamides and methacrylamides having three or less carbon atoms in the alkyl group; and N-vinyl pyrrolidone.

Examples of useful esters of acrylic acid and methacrylic acid include hydroxyethyl methacrylate, isobutyl methacrylate, hexanediol diacrylate, n-hexyl methacrylate, β-carboxyethyl acrylate, thiodiethylene glycol diacrylate, glycidyl methacrylate, 2,3-dibromopropyl acrylate and diethylaminoethyl acrylate. Examples of useful

EP 0 384 598 B1

sterically non-hindered tertiary alkyl acrylamides and methacrylamides include N,N-dimethyl acrylamide, N,N-diethyl acrylamide, N,N-dipropyl acrylamide, N-ethyl-N-butyl acrylamide, N,N-dimethyl methacrylamide, N,N-diethyl methacrylamide, and N,N-dipropyl methacrylamide. The preferred sterically non-hindered tertiary alkyl acrylamides include N,N-dimethyl acrylamide, N,N-diethyl acrylamide, and N,N-dipropyl acrylamide. Useful secondary alkyl acrylamides include N-methyl acrylamide, N-ethyl acrylamide, and N-n-propyl acrylamide.

Where quick bonding of the pressure-sensitive adhesive is desired, a compositions comprising pure monomer is preferred. However, certain additional ingredients may be present in the monomer composition where properties such as internal strength or wet out are desirable. Crosslinking agents useful in monomer compositions include polyethylene glycol diacrylate, pentaerythritol tetraacrylate, tetraethylene glycol dimethacrylate, trimethylol propane triacrylate, trimethylol propane trimethacrylate, allyl methacrylate, 1,6-hexanediol diacrylate, thiodiethylene glycol diacrylate and triallyl cyanurate. Preferred crosslinking agents include polyethylene glycol diacrylate, tetraethylene glycol dimethacrylate, trimethylol propane triacrylate and 1,6-hexanedioldiacrylate. Crosslinking agent may be present in monomer compositions an amounts of from 0 to 20 percent, preferably from 0 to 10 percent.

The monomer composition contains 80 to 100 percent monomer, preferably from 90 to 100 percent monomer, when used with a crosslinking agent. The monomer compositions may also contain various additives such as wetting agents.

The thickness of the monomer compositions is preferably less than 5 micrometers, preferably less than 1 micrometer, and most preferably less than 0.5 micrometer. It is believed that thickness approaching a single molecular layer would function effectively.

The monomer composition is graft-polymerized onto the heat-activatable adhesive composition by use of ionizing radiation such as actinic radiation, electron beam radiation, beta rays, gamma rays, x-rays, or use of a laser beam. Electron beam irradiation is preferred. Electron-beam dosage is typically greater than 0.05 Mrads, preferably from 0.5 Mrads to 5 Mrads. The photopolymerized pressure-sensitive adhesive is then laminated onto the graft-polymerized composition.

The pressure-sensitive adhesive layer of dual-functional adhesive tapes of the invention comprises an ultraviolet-radiation polymerized acrylic pressure-sensitive adhesive. The acrylic adhesives useful for the pressure-sensitive adhesive layer of tapes of the invention preferably contain at least one alkyl acrylate monomer, preferably a monofunctional unsaturated acrylate ester of non-tertiary alkyl alcohol, the molecules of which have from 4 to 14 carbon atoms. Such monomers include, e.g., isooctyl acrylate, 2-ethyl hexyl acrylate, isononyl acrylate, decyl acrylate, dodecyl acrylate, butyl acrylate, and hexyl acrylate. The alkyl acrylate monomers can be used to form homopolymers for the photopolymerizable polymer or they can be copolymerized with polar copolymerizable monomers. When copolymerized with strongly polar copolymerizable monomers, the alkyl acrylate monomer generally comprises at least 75% of the photopolymerizable polymers. When copolymerized with moderately polar copolymerizable monomers, the alkyl acrylate monomer generally comprises at least 60% of the photopolymerizable polymer.

The polar copolymerizable monomers can be selected from strongly polar copolymerizable monomers such as acrylic acid, itaconic acid, hydroxyalkyl acrylates, cyanoalkyl acrylates, acrylamides or substituted acrylamides, or from moderately polar copolymerizable monomers such as N-vinyl pyrrolidone, acrylonitrile, vinyl chloride or diallyl phthalate. Where strongly polar monomers are used, they preferably comprise from 1 parts to 25 parts, preferably from 4 to 20 parts of the acrylic copolymer. Where moderately polar monomers are used, they preferably comprise from 20 to 40 parts of the acrylic copolymer.

The mixture of the polymerizable monomers also contains a photoinitiator to induce polymerization of the monomers. Photoinitiators which are useful include the benzoin ethers such as benzoin methyl ether or benzoin isopropyl ether, substituted benzoin ethers such as anisole methyl ether, substituted acetophenones such as 2,2-diethyoxyacetophenone and 2,2-dimethoxy-2-phenylacetophenone, substituted alpha-ketols such as 2-methyl-2-hydroxypropiophenone, aromatic sulfonyl chlorides such as 2-naphthalene sulfonyl chloride, and photoactive oximes such as 1-phenyl-1,1-propanedione-2-(o-ethoxycarbonyl)-oxime. The photoinitiator is present in an amount of 0.01 to 10 part per hundred parts of the acrylic monomers (phr) of the instant removable pressure-sensitive adhesive compositions.

The photopolymerizable monomer mixtures may also contain a crosslinking agent to enhance heat resistance. Preferred crosslinking agents for an acrylic pressure-sensitive adhesive are multifunctional acrylates such as 1,6-hexanediol diacrylate as well as those disclosed in U.S. Patent No. 4,379,201 (Heilmann et al.), such as trimethylolpropane triacrylate, pentaerythritol tetracrylate, 1,2-ethylene glycol diacrylate, and 1,2-dodecanediol diacrylate. Other useful crosslinking agents include the substituted triazines, such as those disclosed in U.S. Patent Nos. 4,329,384, 4,391,687, and 4,330,590 (Vesley), e.g., 2,4-bis(trichloromethyl)-6-(3,4 dimethoxyphenyl)-s-triazines and other chromophore halogen-s-triazines. When used, the crosslinking agent is present in an amount of from 0.01 to 1 phr.

4

In one preferred embodiment, the pressure-sensitive adhesive layer comprises an acrylic cellular pressure-sensitive adhesive membrane as described in U.S. Patent No. 4,415,615 (Esmay et al).

A cellular pressure-sensitive adhesive membrane is made by the steps of

(a) frothing a composition which is polymerizable to a pressure-sensitive adhesive state,

(b) coating the froth onto a backing, and

(c) polymerizing the coated froth in situ to a pressure-sensitive adhesive state to provide a pressure-sensitive adhesive membrane having a cellular structure.

Frothing can be conveniently accomplished by whipping a gas into the polymerizable composition. After coating the frothed composition onto a backing, the polymerization may be initiated by ultraviolet radiation as taught in U.S. Patent No. 4,181,752, (Martens et al.). Where such photopolymerization is desired, an inert frothing gas is preferably used as air tends to quench photopolymerization. Carbon dioxide and nitrogen are preferred frothing gases.

In another preferred embodiment, the pressure-sensitive adhesive layer may be a foam-like layer, e.g., a monomer blend comprising microspheres may be used. The microspheres may be glass or polymeric. The microspheres should have an average diameter of 10 to 200 micrometers, and comprise from 5 to 65 volume percent of the core layer. The thickness of foam-like layers in preferred tapes of the invention range from 0.3 mm to 4.0 mm in thickness.

Preferred glass microspheres have average diameters of about 50 micrometers. When glass microspheres are used, the pressure-sensitive adhesive layer should be at least 3 times as thick as their diameter, preferably at least 7 times. The thickness of layers containing such glass microspheres should be at least six times, preferably at least twenty times that of each microsphere-free layer.

Polymeric microspheres are also useful for some compositions such as those described in U.S. Patent Nos. 3,615,972, 4,075,238, and 4,287,308, and 4,855,170. The microspheres are available from Kema Nord Plastics under the trade name "Expancel" and from Matsumoto Yushi Seiyaku under the trade name "Micropearln". In expanded form, the microspheres have a specific density of approximately 0.02-0.036 g/cm$^3$. It is possible to include the unexpanded microspheres in the core layer and subsequently heat them to cause expansion, but it is generally preferred to mix in the expanded microspheres. This process ensures that the hollow microspheres in the final core layer are substantially surrounded by at least a thin layer of adhesive.

In a highly preferred embodiment, the dual-functional tape comprises a second pressure-sensitive adhesive layer. Such second layer consists of a polymerized acrylic copolymer which may incorporate similar or dissimilar acrylic monomers in like or unlike thicknesses, having similar or different additives from those acrylic copolymers contained in the first adhesive layer. In such an embodiment, one layer is preferably a foam or foamlike acrylic adhesive; the second layer is a non-foam type acrylic adhesive.

Other useful materials which can be blended into the first or second pressure-sensitive adhesive layer include, but are not limited to, fillers, pigments, fibrous reinforcing agents, woven and nonwoven fabrics, foaming agents, antioxidants, stabilizers, fire retardants, and viscosity adjusting agents.

An especially useful filler material is hydrophobic silica as disclosed in U.S. Patents No. 4,710,536 and 4,749,590, (Klingen et al.). In one preferred embodiment of the present invention, the pressure-sensitive adhesive layer further comprises from 2 to 15 phr of a hydrophobic silica having a surface area of at least 10 m$^2$/g.

The pressure-sensitive adhesive compositions of the invention are preferably prepared by premixing together the photopolymerizable monomers and the photoinitiator. This premix is then partially polymerized to a viscosity in the range of from 500 cps to 5,000 cps to achieve a coatable syrup. Alternatively, the monomers may be mixed with a thixotropic agent such as fumed hydrophilic silica to achieve a coatable thickness. The crosslinking agent(s) and any other ingredients are added to the syrup prior to in situ crosslinking and polymerization.

## Method of Manufacture

A dual-functional tape of the invention is typically made according to the following procedure. A surface treated heat activatable olefin film is made by extruding a thermoplastic olefin elastomer from a single screw extruder onto a silicone coated polyester liner, followed immediately by orienting the film liner composite between a water cooled chrome roll and a rubber roll with the chrome roll touching the surface of the olefin film, to the appropriate thickness.

The surface of the olefin film is then coated with a monomer solution. The coating procedure involves application of the monomer composition in a manner which achieves a relatively uniform coating.

The coated surface is then exposed to electron beam radiation at a dosage of about 5 Mrads, a voltage of about 175 Kv in a nitrogen atmosphere, to result in the graft polymerization of the monomer coating.

A foam-like pressure-sensitive adhesive is made by partially polymerizing a mixture of 100 parts of a alkyl acrylate/polar monomer mixture also containing a photoinitiator under inert atmosphere to a coatable viscosity of 500-5000 CPS by ultra-violet lights. To this was then added additional photoinitiator, crosslinking agent, any fillers such as fumed silica, and glass microbubbles. The composition is then exposed to a bank of ultra-violet lamps at a total energy of 440 mj/cm$^2$.

One face of this pressure-sensitive adhesive is then laminated to the primed surface of the heat-activatable adhesive to form the dual-functional tape.

## Test Methods

### 90° Peel Test

The tape to be tested was slit to a width of 1.27 mm and was then laminated to a substrate (the substrate can be a dynamically vulcanized olefin elastomeric film, made of Santoprene (R) 103-40 available from Monsanto, or EPDM rubber available from Cooper Rubber, both of approximately 2.54 cm wide and 0.32 cm thick) with its heat activatable surface bonded to the substrate. The lamination was accomplished using a "WL-30" laminator, available from 3M, operating at 150 volts and 150 cm/sec. and the composite was allowed to cool to room temperature. The pressure-sensitive adhesive coated surface of this composite was then adhered to a piece of anodized aluminum or a DCT 3000 painted panel of also 2.54 cm wide, available from PPG. Pressure was applied to insure good contact. The composite was then pulled at 90° angle away from the substrate. The peel force was recorded in N/dm and the failure mode was noted.

For samples of this invention, the peel test resulted in cohesive failure of the foam-like adhesive, indicating that the interfacial strengths of the heat activatable olefinic film to both the substrate and the pressure sensitive foam-like adhesive were greater than the cohesive strength of the foam-like adhesive.

In some instances, the bonded constructions were first exposed to water immersion and/or salt spray prior to the peel adhesion measurement.

### Environmental Cycling Test

The test consisted of subjecting the samples to a cycle of 8 hours at 88°C, followed by 16 hours at - 40°C, 8 hours at 38°C and 100% Relative Humidity (RH), and finally for 16 hours at -40°C. This whole procedure was then repeated for 4 more cycles for a complete test.

### 180° Static Peel Test

This test was used to evaluate the elevated temperature performance of the interfacial strength of the tape composite under conditions of stress when stress was applied directly to the primed interface. The tape was first slit to a width of 1.27 cm and 20 cm length and then laminated by its heat activatable side to a 20 cm long substrate made of Santoprene (R) 103-40 available from Monsanto. With a razor blade, the tape was nicked, through the adhesive surface about 10 cm from each end, penetrating through the tape into the substrate. The pressure-sensitive side was bonded to a painted panel (DCT-3000) using 2 passes of a 7 Kg roller. The assembly was allowed to dwell for 72 hours at room temperature prior to attaching a 250 gram weight to the free end of the assembly and bending the tape 180° to fold upon itself. It was then placed in an oven at a pre-set temperature for 30 minutes. After removal from the oven, the sample was allowed to cool and the failure mode was noted.

The following examples are for illustrative purposes only, and are not to be construed as limiting the invention. The scope of the invention is that defined by the claims.

## EXAMPLES

### Example 1

Heat-activatable adhesive priming process and article.

A surface treated heat activatable olefin film was made by first extruding a dynamically vulcanized thermoplastic olefin elastomer, available as Santoprene™ 201-80 - Shore A scale Hardness of 80 from Monsanto Company, from a single screw Haake extruder at a temp. of 220° C onto a silicone coated polyester liner, followed immediately by orienting the film liner composite between a water cooled chrome roll and a rubber roll with the chrome roll touching the surface of the olefin film, to a thickness of 0.063 mm.

The surface of the olefin film was then coated with a monomer solution containing 100 parts of N,N-dimethyl acrylamide and 0.1 parts of a fluorochemical acrylate oligomer, (a surfactant available from 3M as "FC 430"). The coating procedure involved saturating a Kim-wipe with the monomer solution and then wiping the clean surface of the olefin film with the solution, to achieve a relatively uniform coating of about 15 micrometers thick.

The coated surface was then exposed to electron beam radiation at a dosage of about 5 Mrads a voltage of about 175 Kv in a nitrogen atmosphere, and a line speed of 7.5 m/min. to result in the graft polymerization of the monomer coating.

Example 2

A foam-like adhesive was made by partially polymerizing a mixture of 100 parts of a 87.5/12.5 isooctyl acrylate/acrylic acid (IOA/AA) and 0.03 parts Irgacure 651 (IRG), available from Ciba Geigy, under inert atmosphere to a coatable viscosity of 500-5000 CPS by ultra-violet lights. To this was then added an additional 0.1 parts IRG 651, 0.055 parts of 1,6-Hexanedioldiacrylate, 2 parts of fumed silica, Aerosil™ R972 available from Degussa, and 8 parts of C-15/250 glass microbubbles available from 3M. The composition was then frothed with nitrogen in a procedure similar to that described in U.S. 4,415,615, Esmay et al., to a density of 1024 $Kg/m^3$ and a final thickness of 1.0 mm. This was then exposed to a bank of ultra-violet lamps at a total energy of 440 $mj/cm^2$. One face of this foam-like adhesive was then laminated to the primed surface of the film of Example 1 at a laminating temperature of 120°C to accelerated the bonding process, while the other face was laminated to a solvent-based adhesive transfer tape having a composition of isooctyl acrylate/methyl acrylate/acrylic acid (57.5/35 17.5) to form a composite. This tape composite was then tested according to the tests described above and results are shown in Table 1.

Example 2-$C_1$, 2-$C_2$

These were made similar to Example 2, except that no surface treatment was performed for 2-$C_1$, and 2-$C_2$ was exposed to E-beam without a coating of monomer grafting solution. These were also tested and were found not to have any anchorage between the heat-activatable adhesive film and the foam-like adhesive.

Examples 3-5, 3-C

These were made similar to Examples 1 and 2 except that a different primer was grafted. These differences are shown in Table 2. These tapes were also tested according to Example 2 and the results are shown in Table 1.

Examples 3 and 3-C were also tested on two other substrates: Cooper EPDM and Santoprene. These results are shown in Table 3.

## TABLE 1

| Examples | 2 | 3 | 4 | 5 |
|---|---|---|---|---|
| **90° peel (N/dm)** | | | | |
| **EPDM** | | | | |
| a) Room Temperature | | | | |
|    1 hr | 137* | 126* | 147* | 133* |
|    72 hr | 194* | 207* | 203* | 214* |
| b) 88°C | | | | |
|    2 weeks | 521** | 425** | 509** | 502** |
| c) 100°C/100% RH | | | | |
|    72 hr | 260* | 306* | 228* | 277* |
|    2 wks | 285* | 316* | 309* | 277* |
| d) Water Immersion | | | | |
|    240 hours | 278* | 197* | 172* | 270* |
| e) Salt Spray | | | | |
|    240 hours | 341* | 309** | 277* | 352* |
| f) Environmental Test | | | | |
|    Painted Panel | 405** | 376** | 424** | 434* |
| **180° Static Peel** | | | | |
| **Anodized Aluminum** | | | | |
| a) 100°C */graft | * | * | * | |
| b) 110°C graft | no fail | no fail | no fail | |
| c) 120°C | *** | *** | *** | *** |

\* sample peeled off the painted panel
\** cohesive failure of foam-like adhesive
\*** pressure-sensitive adhesive separated from the
    foam-like adhesive graft foam-like adhesive separated
    from grafted interface

## TABLE 2

| Examples | Primer |
|---|---|
| 3 | 100 % Glycidyl Methacrylate (GMA) |
| 4 | 80/20 Glycidyl Methacrylate (GMA)/ Trimethylol propane triacrylate(TMPTA) |
| 5 | 80/20 N, N-dimethyl Acrylamide(DMA)/ Trimethylol propane triacrylate(TMPTA) |
| 3-C | Thermoplastic polyamide * (no grafting) |

\* available as Macromelt 6240 by Henkel

## TABLE 3

| Examples<br>Substrate | 3<br>Santoprene | 3<br>Cooper EPDM | 3-C<br>Santoprene |
|---|---|---|---|
| **90°peel(N/dm)** | | | |
| a) Rm. Temp. | | | |
| 1 hr | 126* | 108* | 10.8** |
| 72 hrs | 154* | 207* | 11.6** |
| b) 88°C | | | |
| 2 wks. | 529** | 424** | 1.8** |
| c) 100°C/100% RH | | | |
| 72 hrs. | 291* | 305* | 144** |
| 2 wks. | 291* | 315* | 25** |
| d) Water Immersion | | | |
| 240 hrs. | 273** | 196* | 91** |
| e) Salt Spray | | | |
| 240 hrs. | 319* | 308** | 3** |
| f) Environmental | | | |
| Cycling Test | 494** | 375** | 23** |
| **180° Static Peel** | | | |
| a) 100°C | * | | * |
| b) 110°C | no fail | | -- |
| c) 120°C | *** | | .* |

\* sample peeled off the substrate
\*\* adhesive failure of the foam-like adhesive
\*\*\* pressure-sensitive adhesive separated from the
foam-like adhesive

Example 6

This was made similar to Examples 1 and 2 except a thermoplastic copolymer of ethylene and acrylic acid available as Primacor™ 3330 from Dow Chemical was used to produce the heat activatable film at a thickness of .08 mm and the film was corona treated prior to application of the grafting monomer. This was tested in a similar manner as Example 2 and the results are shown in Table 4.

Example 6-C

This was made similar to Example 3-C except the heat-activatable film was made from Primacor™ 3330. This was also tested in the same manner as Example 3-C and the results are shown also in Table 4.

## TABLE 4

| Examples | 6 | 6-C |
|---|---|---|
| 90° peel (N/dm) | | |
| a)88°C/100% RH | | |
| 2 wks. | 371** | 304** |
| b)100°C/100% RH | | |
| 3 days | 259** | 208** |
| 2 wks. | 239** | 218** |
| c)Water Immersion | | |
| 10 days Rm Temp. | 208** | 208** |
| d)Salt Spray | | |
| 10 days Rm Temp. | 246** | 224** |
| e)Environmental | | |
| Cycling Test | 272** | 240** |
| 180° Static Peel | | |
| a) 100°C | no failure | * |
| b) 110°C | no failure | * |

*adhesive failure between polyamide film and ethylene acrylic film
**adhesive failure of foam-like adhesive

Examples 7-10

These were made similar to Examples 1 and 2 except the Santoprene heat activatable film adhesive was replaced with 0.125 mm films made from two blends of polypropylene and EPDM, both of which are available from B P Performance Polymers, Inc., and different primers were grafted. These compositions of the blends and primers are shown in Table 5 and the test results are shown in Table 6.

## TABLE 5

| Examples | Primer | Polypropylene/ EPDM ratio (parts) | Fillers (parts) |
|---|---|---|---|
| 7 | 100% dimethylacrylamide (DMA) | 40/30 | 30 |
| 8 | 100% glycidyl methacrylate (GMA) | 40/30 | 30 |
| 9 | 100% dimethylacrylamide (DMA) | 40/60 | small amount |
| 10 | 100% glycidyl methacrylate (GMA) | 40/60 | small amount |

## TABLE 6

| Example | 7 | 8 | 9 | 10 |
|---|---|---|---|---|
| Substrate | Santoprene | Santoprene | Santoprene | Santoprene |

### 90° peel(N/dm)

| | 7 | 8 | 9 | 10 |
|---|---|---|---|---|
| a)Room Temp | | | | |
| 1 hr. | 394** | 355** | 380** | 380** |
| 72 hrs | 394** | 355** | 380** | 380** |
| b)88°C/100% RH | | | | |
| 24 hrs | 424** | 409** | 426** | 432** |
| 14 days | 360** | 307** | 439** | 465** |
| c)34°C/100% RH | | | | |
| 14 days | 236** | 251** | 255** | 242** |
| d)Water Immersion | | | | |
| 10 days | 276** | 274** | 275** | 257** |
| e)Salt Spray | | | | |
| 10 days | 256** | 284** | 260** | 264** |
| f)Environmental | | | | |
| Cycling Test | 331** | 340** | 339** | 325** |

** cohesive failure of foam-like adhesive

## Claims

1. A dual-functional adhesive tape comprising a layer containing a polyolefin heat-activatable adhesive having graft-polymerized by ionizing radiation to at least a portion thereof, at least one monomer selected from the group consisting of acrylic acid, methacrylic acid and esters thereof; acrylamide; methacrylamide; sterically nonhindered tertiary alkyl acrylamides and methacrylamides; secondary alkyl acrylamides and methacrylamides having three or less carbon atoms in the alkyl group; and N-vinyl pyrrolidone, and firmly adherently bonded to said graft-polymerized monomer, a layer containing an ultraviolet-radiation polymerized acrylic-type pressure-sensitive adhesive, wherein said pressure-sensitive adhesive remains firmly bonded to said heat-activatable adhesive even when said tape is heated for attachment.

2. The dual-functional adhesive tape of claim 1 wherein said graft-polymerized monomer is N,N-dimethylacrylamide.

3. The dual-functional adhesive tape of any preceding claim wherein said heat-activatable adhesive is a dynamically vulcanized polyolefin.

4. The dual-functional adhesive tape of any preceding claim wherein said acrylic-type -adhesive comprises
   (a) at least 60 parts of an alkyl acrylate monomer, the alkyl groups of which have an average of 4 to 12 carbon atoms, and
   (b) correspondingly, up to 40 parts of a monoethylenically unsaturated polar copolymerizable monomer, and
   (c) from 0.01 part to 10 parts of a photoinitiator per 100 parts of monomer.

5. The dual-functional tape of claim 4 wherein said acrylic-type adhesive comprises from 60 to 99 parts of an alkyl acrylate monomer selected from isooctyl acrylate, butyl acrylate, isononyl acrylate, 2-ethylhexyl acrylate, and isodecyl acrylate and correspondingly, from 1 part to 40 parts of a polar copolymerizable monomer, and where said polar copolymerizable monomer is selected from acrylic acid, itaconic acid, N-vinyl pyrrolidone, N-vinyl caprolactam, acrylamide, substituted acrylamide, and methacrylic acid.

6. The dual-functional tape of any preceding claim wherein said acrylic-type adhesive further comprises microspheres selected from glass microspheres, and polymeric microspheres.

7. The dual-functional tape of any preceding claim wherein said acrylic-type adhesive is a cellular pressure-sensitive adhesive.

8. The dual-functional tape of any preceding claim further comprising a second layer of acrylic-type pressure-sensitive adhesive.

9. A method of making the dual-functional tape of comprising the steps of
(a) extruding a heat-activatable adhesive,
(b) coating onto said heat-activatable adhesive a monomer composition selected from the group consisting of acrylic acid, methacrylic acid and esters thereof; acrylamide; methacrylamide; sterically non-hindered tertiary alkyl acrylamides and methacrylamides; secondary alkyl acrylamides and methacrylamides having three or less carbon atoms in the alkyl group; and N-vinyl pyrrolidone,
(c) irradiating the coated heat-activatable adhesive with ionizing radiation selected from actinic radiation or electron beam radiation to graft-polymerize said monomer to said heat-activatable polyolefin adhesive,
(d) applying a layer of acrylic type pressure-sensitive adhesive over the graft-polymerized monomer.

## Patentansprüche

1. Zweifunktions-Klebeband mit einer Schicht, die einen wärmeaktivierbaren Polyolefin-Klebstoff enthält, mit dem mindestens in einem Teil desselben durch ionisierende Strahlung mindestens ein Monomer pfropfpolymerisiert ist, das aus der Gruppe ausgewählt ist, die aus Acrylsäure, Methacrylsäure und den Estern derselben, Acrylamid, Methacrylamid, sterisch ungehinderten tertiären Alkylacrylamiden und Methacrylamiden, sekundären Alkylacrylamiden und Methacrylamiden mit drei oder weniger Kohlenstoffatomen in der Alkylgruppe und N-Vinylpyrrolidon besteht, und wobei mit dem pfropfpolymerisierten Monomer eine Schicht verklebt ist, die einen durch Ultraviolettstrahlung polymerisierten Acryl-Haftkleber enthält, der mit dem wärmeaktivierbaren Klebstoff auch dann fest stoffschlüssig verbunden bleibt, wenn das Band zu seinem Anbringen erhitzt wird.

2. Zweifunktions-Klebeband nach Anspruch 1, in dem das pfropfpolymerisierte Monomer N,N-Dimethyladrylamid ist.

3. Zweifunktions-Klebeband nach einem der vorhergehenden Ansprüche, in dem der wärmeaktivierbare Klebstoff ein dynamisch vulkanisiertes Polyolefin ist.

4. Zweifunktions-Klebeband nach einem der vorhergehenden Ansprüche, in dem der Acryl-Klebstoff umfaßt:
(a) mindestens 60 Teile eines Alkylacrylatmonomers, dessen Alkylgruppen durchschnittlich 4 bis 12 Kohlenstoffatome besitzen, und
(b) in einer entsprechenden Menge von bis zu 40 Teilen ein monoethylenisch ungesättigtes, polares, copolymerisierbares Monomer und
(c) pro 100 Teile Monomer 0,01 bis 10 Teile eines Photoinitiators.

5. Zweifunktions-Band nach Anspruch 4, in dem der Acryl-Klebstoff 60 bis 99 Teile eines aus Isooctylacrylat, Butylacrylat, Isononylacrylat, 2-Ethylhexylacrylat und Isodecylacrylat ausgewählten Arylacrylatmonomers und in einer entsprechenden Menge von 1 Teil bis 40 Teilen ein copolymerisierbares polares Monomer enthält, das aus Acrylsäure, Itaconsäure, N-Vinylpyrrolidon, N-Vinylcaprolactam, Acrylamid, substituiertem Acrylamid und Methacrylsäure ausgewählt ist.

6. Zweifunktions-Band nach einem der vorhergehenden Ansprüche, in dem der Acryl-Klebstoff erner aus Glas-Mikroperlen und polymeren Mikroperlen ausgewählte Mikroperlen enthält.

7. Zweifunktions-Band nach einem der vorhergehenden Ansprüche, in dem der Acryl-Klebstoff ein zelliger Haftkleber ist.

8. Zweifunktions-Band nach einem der vorhergehenden Ansprüche mit einer zweiten Schicht aus einem Acryl-Haftkleber.

9. Verfahren zum Herstellen des Zweifunktions-Bandes mit folgenden Schritten:
(a) es wrid ein wärmeaktivierbarer Klebstoff extrudiert,
(b) der wärmeaktivierbare Klebstoff wird mit einer Monomerzusammensetzung überzogen, die aus der Gruppe ausgewählt ist, die aus Acrylsäure, Methacrylsäure und den Estern derselben, Acrylamid, Methacrylamid, sterisch ungehinderten tertiären Alkylacrylamiden und Methacrylamiden, sekundären Alkylacrylamiden und Methacrylamiden mit drei oder weniger Kohlenstoffatomen in der Alkylgruppe und N-Vinylpyrrolidon besteht,
(c) zum Pfropfpolymerisieren des Monomers mit dem wärmeaktivierbaren Polyolefin-Klebstoff wird der überzogene wärmeaktivierbare Klebstoff mit ionisierender Strahlung bestrahlt, die aus aktinischer Strahlung oder gebündelten Elektronenstrahlen ausgewählt ist, und
(d) auf das pfropfpolymerisierte Monomer wird eine Schicht eines Acryl-Haftklebers aufgetragen.

**Revendications**

1. Ruban adhésif à fonction double, comprenant une couche contenant un adhésif polyoléfinique activable à la chaleur ayant été polymérisé par greffage au moyen d'un rayonnement ionisant sur au moins une partie de celui-ci, au moins un monomère choisi dans l'ensemble constitué par l'acide acrylique, l'acide méthacrylique et les esters de ceux-ci, un acrylamide, un méthacrylamide, des acrylamides et des méthacrylamides d'alkyles tertiaires sans empêchement stérique, des acrylamides et des méthacrylamides d'alkyles secondaires ayant au plus trois atomes de carbone dans le groupe alkyle, et la N-vinylpyrrolidone, et solidement fixé par adhérence sur ledit monomère polymérisé par greffage, une couche contenant un adhésif sensible à la pression, du type acrylique, polymérisé par rayonnement ultraviolet, caractérisé en ce que ledit adhésif sensible à la pression reste solidement collé sur ledit adhésif activable à la chaleur, même quand ledit ruban est chauffé pour être fixé.

2. Ruban adhésif à fonction double selon la revendication 1, caractérisé en ce que ledit monomère polymérisé par greffage est le N,N-diméthylacrylamide.

3. Ruban adhésif à fonction double selon l'une quelconque des revendications précédentes, caractérisé en ce que ledit adhésif activable à la chaleur est une polyoléfine vulcanisée dynamiquement.

4. Ruban adhésif à fonction double selon l'une quelconque des revendications précédentes, caractérisé en ce que ledit adhésif du type acrylique comprend :
(a) au moins 60 parties d'un monomère acrylate d'alkyle, dont les groupes alkyles contiennent en moyenne de 4 à 12 atomes de carbone,
(b) de manière correspondante, jusqu'à 40 parties d'un monomère polaire copolymerisable monoéthyléniquement insaturé, et
(c) de 0,01 partie à 10 parties d'un photo-initiateur, pour 100 parties de monomère.

5. Ruban adhésif à fonction double selon la revendication 4, caractérisé en ce que ledit adhésif du type acrylique comprend de 60 à 99 parties d'un monomère acrylate d'alkyle choisi dans l'ensemble constitué par l'acrylate d'isooctyle, l'acrylate de butyle, l'acrylate d'isononyle, l'acrylate de 2-éthylhexyle et l'acrylate d'isodécyle, et, de manière correspondante, de 1 à 40 parties d'un monomère polaire copolymérisable, ledit monomère polaire copolymérisable étant choisi dans l'ensemble constitué par l'acide acrylique, l'acide itaconique, la N-vinylpyrrolidone, le N-vinylcaprolactame, l'acrylamide, un acrylamide substitué et l'acide méthacrylique.

6. Ruban à fonction double selon l'une quelconque des revendications précédentes, caractérisé en ce que l'adhésif du type acrylique comprend, en outre, des microsphères choisies parmi des microsphères de verre et des microsphères polymères.

7. Ruban à fonction double selon l'une quelconque des revendications précédentes, caractérisé en ce que l'adhésif du type acrylique est un adhésif cellulaire sensible à la pression.

8. Ruban à fonction double selon l'une quelconque des revendications précédentes, comprenant, en outre, une deuxième couche d'adhésif sensible à la pression, du type acrylique.

9. Procédé de fabrication d'un ruban à fonction double, comprenant les étapes consistant à :
   (a) extruder un adhésif activable à la chaleur,
   (b) appliquer sur ledit adhésif activable à la chaleur une composition monomère choisie dans l'ensemble constitué par l'acide acrylique, l'acide méthacrylique et les esters de ceux-ci, un acrylamide, un méthacrylamide, des acrylamides et des méthacrylamides d'alkyles tertiaires sans empêchement stérique, des acrylamides et des méthacrylamides d'alkyles secondaires ayant au plus trois atomes de carbone dans le groupe alkyle, et la N-vinylpyrrolidone,
   (c) irradier l'adhésif revêtu activable à la chaleur avec un rayonnement ionisant, choisi parmi un rayonnement actinique et un rayonnement par faisceau d'électrons, pour polymériser par greffage ledit monomère sur ledit adhésif polyoléfinique activable à la chaleur, et
   (d) appliquer une couche d'adhésif sensible à la pression, du type acrylique, sur le monomère polymérisé par greffage.